# EUROPÄISCHE PATENTSCHRIFT

(11) **EP 4 105 552 B1**
(45) Veröffentlichungstag und Bekanntmachung des Hinweises auf die Patenterteilung: **01.05.2024**
(21) Anmeldenummer: 22179621.2
(22) Anmeldetag: 17.06.2022
(51) Int. Cl.: F23C 7/06, F23C 9/00, F23L 15/04, B33Y 80/00, F28D 7/10, F28D 7/12, F28F 1/06, F28F 1/08, F28F 7/02, F23C 7/00

(54) **REKUPERATOR-BRENNER MIT EINEM REKUPERATOR ZUM FÜHREN GEGENSTRÖMENDER FLUIDE**
RECUPERATOR BURNER WITH A RECUPERATOR FOR GUIDING COUNTER-FLOWING FLUIDS
BRÛLEUR RÉCUPÉRATEUR DOTÉ D'UN RÉCUPÉRATEUR PERMETTANT DE GUIDER DES FLUIDES À CONTRE-COURANT

(30) Priorität: 18.06.2021 WO PCT/EP2021/066647; 21.06.2021 WO PCT/EP2021/066827
(43) Veröffentlichungstag der Anmeldung: 21.12.2022
(73) Patentinhaber: Schunk Ingenieurkeramik GmbH, 47877 Willich-Münchheide (DE); Kueppers Solutions GmbH, 44263 Dortmund (DE)
(72) Erfinder: Brands, Detlef, 40667 Meerbusch (DE); Schnetter, Lars, 53518 Wimbach (DE); Wlotzka, Kamil, 47877 Willich (DE); Te Kaat, Jens, 45881 Gelsenkirchen (DE)
(74) Vertreter: Sparing Röhl Henseler

(56) Entgegenhaltungen:
- WO-A1-2016/057443
- US-A- 4 877 396
- US-A1- 2019 154 345

## Beschreibung

Die Erfindung betrifft einen Rekuperator-Brenner mit einem Rekuperator zum Führen gegenströmender Fluide nach dem Oberbegriff des Anspruchs 1.

Bei Rekuperator-Brennern wird durch einen Wärmeaustausch zwischen der Brennerzuluft und dem Abgasstrom des Brenners der Wirkungsgrad erhöht. Hierzu dient der Rekuperator, der zwischen diesen beiden Gasströmen einen Wärmeaustausch vornimmt. Der Rekuperator kann dazu aus unterschiedlichen Werkstoffen, insbesondere metallischen und keramischen Werkstoffen, gebildet sein. Insbesondere sind metallische Werkstoffe für untere und mittlere Temperaturzonen und keramische Werkstoffe für Hochtemperaturzonen vorgesehen. Durch eine Werkstoffkombination können die einzelnen Abschnitte des Rekuperators für eine gute Wärmeübertragung optimiert werden.

Aus DE 196 16 288 A1 ist ein Rekuperator aus keramischem Material für einen Rekuperator-Brenner bekannt. Der Rekuperator umfasst ein Innenrohr, ein Außenrohr und ein wärmeübertragendes Zwischenrohr. Das Zwischenrohr unterteilt einen Ringraum zwischen dem Innenrohr und dem Außenrohr in zwei konzentrische, im Wesentlichen ringförmige Kanäle. Der innere Kanal wird von der vorzuwärmenden Verbrennungsluft durchströmt, während der äußere Kanal vom Abgas des Brenners durchströmt wird.

Rekuperatoren aus Keramik haben gegenüber Stahlrekuperatoren den großen Vorteil der höheren Temperaturfestigkeit. Erkauft wird dieser Vorteil durch einen deutlich geringeren Wirkungsgrad, wenn keramische Rohre als Glattrohre oder Wellrohre mit entsprechend begrenzter wärmeübertragender Fläche hergestellt sind. Um den Wirkungsgrad zu verbessern ist bekannt, die Wärmeübertragungsfläche zu vergrößern. Dazu kann die Wandung des Zwischenrohrs an einer Mehrzahl von über der Länge und über dem Umfang verteilten Stellen zur Bildung von nach außen gerichteten Noppen auswärts und zur Bildung von nach innen gerichteten Noppen einwärts gewölbt ausgebildet sein.

Die Noppen bewirken eine beträchtliche Vergrößerung der wärmeübertragenden Fläche des Zwischenrohrs und damit eine erhebliche Steigerung des Wirkungsgrades des Rekuperators. Die entgegengesetzt gerichteten Noppen bilden Vertiefungen, so dass die Gase auf ihrem Strömungsweg abwechselnd komprimiert und expandiert werden. Über die Länge des Zwischenrohrs entstehen somit geradlinige Strömungswege mit aufeinanderfolgenden Einschnürungen und Erweiterungen. Dadurch werden gleichförmige Strömungsverhältnisse über die Länge des Rekuperators erzeugt, die Grenzschichtbildungen vermeiden. Es stellen sich Strömungsverhältnisse ein, die den Wirkungsgrad des Rekuperators an den eines Rippenrekuperators aus Stahl heranbringen. Der gesamte Rekuperator besteht aus siliziuminfiltriertem Siliziumcarbid (SiSiC).

Aus EP 1 486 728 B1 ist ein Rekuperator-Brenner mit einem keramischen Rekuperator bekannt, der zur Erhöhung der Wärmeaustauschflächen Falten aufweist, die sich in Längsrichtung des Rekuperators erstrecken. Die Falten sind dabei stetig gekrümmt, insbesondere wellenförmig ausgebildet. Eine große Wärmeaustauschfläche soll dadurch gewährleistet werden. Durch Ausgestaltung der Faltenform und Faltenanzahl soll eine optimierte Wärmeübertragung erreicht werden. Der Rekuperator besteht vorzugsweise aus einer SiC-Keramik und ist bevorzugt als Schlickergussteil hergestellt.

Aus DE 195 41 922 C2 ist ein keramischer Rekuperator für einen Rekuperator-Brenner bekannt, der ebenfalls aus einem Rohrabschnitt besteht. Dieses Rekuperatorrohr weist endseitig eine Brennkammer auf und dient zur Trennung von ausströmenden Verbrennungsgasen und zuströmender Verbrennungsluft und zum Wärmeaustausch zwischen diesen. An dem Rekuperator ausgebildete radiale Zacken vergrößern die Oberfläche des Rekuperators und verbessern den Wärmeübergang von Verbrennungsgasen auf Verbrennungsluft. Durch die Zacken wird die Strömungsgrenzschicht sowohl an der Außenseite des Rekuperators als auch an seiner Innenseite immer wieder aufgerissen, was den Wärmeübergang gegenüber glatten Oberflächen wesentlich steigert. Die in dem Rekuperator gehaltene keramische Brennkammer kann aus Silizium-Carbid hergestellt sein. Ist der Rohrabschnitt des Rekuperators endseitig einstückig mit der Brennkammer ausgebildet, ergibt dies einen einfachen und robusten Aufbau. Die Wandung der Brennkammer ist glatt. Die Brennkammer kann bei der Herstellung im Schlickergussverfahren ohne Zusatzaufwand an dem Rekuperator ausgebildet werden. Als Keramikmaterial für den Rekuperator eignet sich insbesondere SiC-Keramik, die eine entsprechende Hitzebeständigkeit und Wärmeleitfähigkeit aufweist. Ein Rekuperator-Brenner mit den Merkmalen des Oberbegriffs des Anspruchs 1 ist aus der Schrift US 4877396 A bekannt.

Bei den vorbekannten keramischen Rekuperatoren wird demnach zur Vergrößerung der Wärmeaustauschfläche auf Rohrabschnitte mit kompliziert geformter Oberfläche abgestellt. Diese strukturierten Oberflächen neigen dazu, zu verrunden, insbesondere bei einer Herstellung des Rekuperators aus Keramik. Ferner ist eine präzise und kostengünstige Herstellung nicht möglich.

Aufgabe der Erfindung ist es daher, einen Rekuperator-Brenner mit einem Rekuperator zum Führen gegenströmender Fluide zu schaffen, der eine gute Wärmeübertragung gewährleistet und dabei eine kostengünstige Herstellung ermöglicht.

Diese Aufgabe wird durch die Merkmale des Anspruchs 1 gelöst.

Hierdurch wird ein Rekuperator-Brenner mit einem Rekuperator geschaffen, der die beiden Strömungssysteme für die gegenströmenden Fluide in einem aus einem Stück bestehenden Wärmeübertragungskörper aufnimmt. Erfindungsgemäß ist zudem vorgesehen, dass der Wärmeübertragungskörper an dem Ende, dem der Brennereinlass zugeordnet ist, einen Strömungstopf mit einstückiger Anbindung von Einzug für vorzuwärmende Verbrennungsluft und Abzug für Abgas ausbildet.

Die Formgebung des Wärmeübertragungskörpers mit einem Strömungstopf bildet eine Außenwandung des Wärmeübertagungskörpers am Brennereinlass als eine Art Gefäßwand fort, die einen Innenraum umgibt. In diesem Innenraum können Strömungswege definiert werden für das Einleiten oder Ausleiten von Fluidströmungen.

Da der Strömungstopf von einem Materialfortsatz des Wärmeübertragungskörpers in nur einem äußeren Randbereich gebildet wird, kann ein von den Durchströmungskanälen durchdrungener Innenkörperabschnitt topfbodenartig gegenüber dem Strömungstopf enden oder mit einer Wärmetauscherverlängerung in den Strömungstopf ragen. Eine Erhöhung der Wärmetauscherleistung kann hierdurch erreicht werden in Verbindung mit einer einstückigen Anformung der Stutzen für das Ein- und Ableiten der strömenden Fluide. Diskontinuitäten durch Anschlussstellen werden vermieden. Dies erhöht die Verschleißfestigkeit und öffnet Optionen für ein verbessertes Integrieren des Rekuperators in den Rekuperator-Brenner.

Vorzugsweise kann eine monolithische Raumform für den Wärmeübertragungskörper gewählt werden, der die zum Führen gegenströmender Fluide vorgesehenen Strömungssysteme vereinigt. In Längsrichtung des Rekuperators können sich erstreckende Durchströmungskanäle angelegt werden, die beispielsweise mäanderförmige Strömungsfelder ausbilden.

Durch additive Fertigung können Wärmetauscherstrukturen realisiert werden, die Zellstrukturen mit dreifach periodischen Minimaloberflächen besitzen, z.B. als Gyroid, Doppel-Gyroid, als Gyroid mit kubisch angeordneter Zellstruktur, zylindrisch angeordneter Zellstruktur oder sphärisch angeordneter Zellstruktur. Der Durchfluss der Fluide kann durch Wahl der Zellstruktur optimiert werden. Die Durchströmungslängen können erfindungsgemäß vergrößert werden, ohne dass es zu wesentlichen Einschnürungen oder Expansionen kommt, wie dies im Stand der Technik der Fall ist.

Der erfindungsgemäße Rekuperator kann aus metallischen und/oder keramischen Werkstoffen hergestellt sein. Über den Strömungstopf kann zudem die kalte/kühlere Verbrennungsluft bzw. Frischluft effektiver in den Rekuperator einströmen, und zwar in strömungstechnischer Hinsicht als auch zur Effizienzsteigerung des Wärmeaustauschs. Die Räumlichkeit des Wärmeübertragungskörpers kann zur Ausbildung eines Anströmfeldes im Inneren des Wärmeübertragungskörpers genutzt werden.

Im Wärmeübertragungskörper vorgesehene Durchströmungskanäle, insbesondere dann, wenn mehrere vorzugsweise in Längsrichtung des Rekuperators geführt sind, können einendseitig am Brennereinlass angeschnitten/geöffnet sein, wodurch ein quasi gleichzeitiges Anströmen über den genannten Einzug möglich ist.

Erfindungsgemäß hat sich überraschend herausgestellt, dass nicht allein die Vergrößerung der Wärmeübertragungsfläche die Wärmeübertragung verbessert, sondern insbesondere auch die Strömungsverhältnisse in den Durchströmungskanälen von Bedeutung sind. Die einstückige Anbindung ist eine funktionsfördernde Anbindung insbesondere des Einzugs für die Verbrennungsluft am Brennereinlass, da eine zusätzlich nutzbare Wärmetauscherfläche generierbar ist. Die Wärmeübertragungsfläche kann folglich erfindungsgemäß auch erhöht werden.

Besonders bevorzugt besitzt der Wärmetauscherkörper eine Gyroid-Struktur als eine spezielle Ausgestaltung einer dreifach periodischen Minimaloberfläche (TPMS), die beispielsweise den Raum des Wärmetauschers in zwei identische Strömungssysteme teilen kann, und zwar von Wegen, die sich nicht kreuzen und in Längsrichtung des Rekuperators verlaufen können. Weitere Durchströmungskanäle für ein mindestens drittes und/oder viertes Fluid können insbesondere in Verbindung mit einer Gyroid-Struktur in den Wärmeübertragungskörper integriert werden. Auch können die Durchströmungskanäle in Teildurchströmungskanäle aufgetrennt werden, die über den Strömungstopf in einer Hauptströmung gemeinsam beaufschlagbar sind.

Vorteile einer vorzugsweisen vollkeramischen Ausbildung des Rekuperators mit Einzügen, Auszügen und Brennkammer, also die Integration aller relevanten Baugruppen eines Rekuperator-Brenners, liegen ferner in der Minimierung von Anbindungsschnittstellen. Zu den Vorteilen der erfindungsgemäßen Lösung gehören weiterhin die Effizienzsteigerung u.a. aufgrund der positiven Werkstoffeigenschaften (z.B. hohe Wärmeleitfähigkeit) und eine 3D-druckbare Werkstoffvariante aus reaktionsgebundenem Siliziumcarbid (RBSiC).

Auch geringere Wartungskosten durch Eliminierung von ursprünglich vorgesehenen Werkstoffen Stahl und Kupfer innerhalb des Rekuperatorbereiches ergeben sich.

Eine vorzugsweise monolithische konstruktive Gestaltung der einzelnen Bereiche bis hin zum einteiligen (vollkeramischen) Rekuperator können durch die Nutzung der 3D-Technologie für den Werkstoff RBSiC realisiert werden.

Weitere Ausgestaltungen und Vorteile der Erfindung sind der nachfolgenden Beschreibung und den Unteransprüchen zu entnehmen.

Die Erfindung wird nachstehend anhand der in den beigefügten Abbildungen dargestellten Ausführungsbeispiele näher erläutert.
Fig. 1 zeigt eine perspektivische Ansicht eines Rekuperator-Brenners, teilweise geschnitten, mit einem keramischen Rekuperator gemäß einem ersten Ausführungsbeispiel,
Fig. 2 zeigt einen Längsschnitt des Rekuperator-Brenners gemäß Fig. 1,
Fig. 3 zeigt einen Querschnitt des Rekuperator-Brenners gemäß Fig. 1,
Fig. 4 zeigt einen weiteren Längsschnitt des Rekuperator-Brenners gemäß Fig. 1,
Fig. 5 zeigt eine perspektivische, teilweise geschnittene Ansicht eines Rekuperators ohne Mantelrohr gemäß einem zweiten Ausführungsbeispiel für einen Rekuperator-Brenner,
Fig. 6 zeigt einen Längsschnitt eines Rekuperators gemäß Fig. 5,
Fig. 7 zeigt eine perspektivische, teilweise geschnittene Ansicht eines Rekuperators ohne Mantelrohr gemäß einem dritten Ausführungsbeispiel für einen Rekuperator-Brenner,
Fig. 8 zeigt einen Querschnitt eines Rekuperators gemäß einem vierten Ausführungsbeispiel für einen Rekuperator-Brenner,
Fig. 9 zeigt eine perspektivische, teilweise geschnittene Ansicht eines Rekuperators ohne Mantelrohr gemäß einem fünften Ausführungsbeispiel für einen Rekuperator-Brenner.

Die Erfindung betrifft einen Rekuperator-Brenner, der unabhängig von den relevanten Funktionsbereichen in drei Bereiche unterteilt werden kann, und zwar einen Anbindungsbereich mit Brennereinlass, einen Rekuperatorbereich und einen Flammaustritt mit Brennerauslass, wie nachfolgend im Einzelnen beschrieben ist.

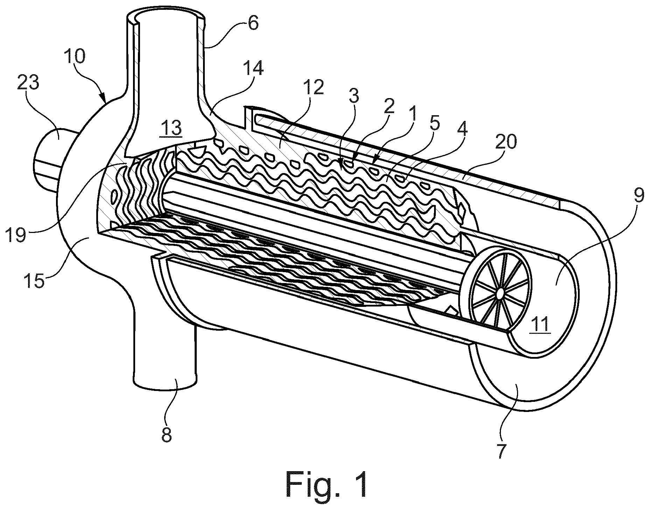

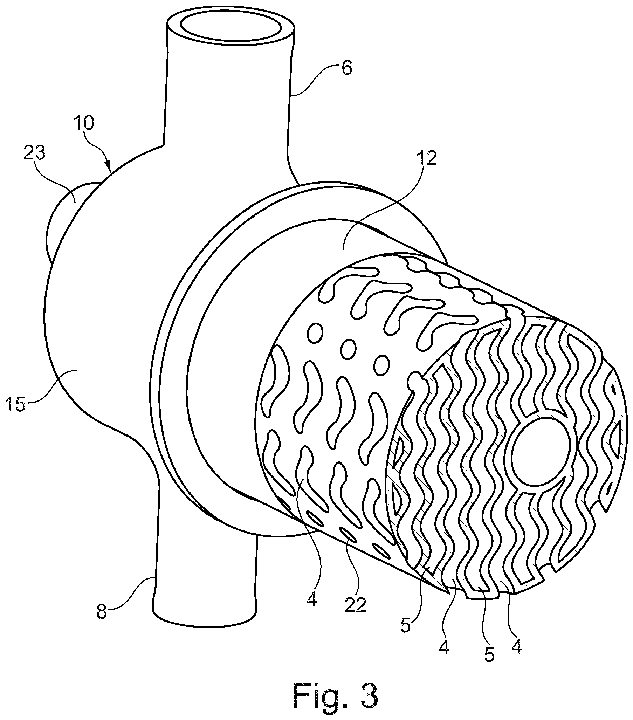

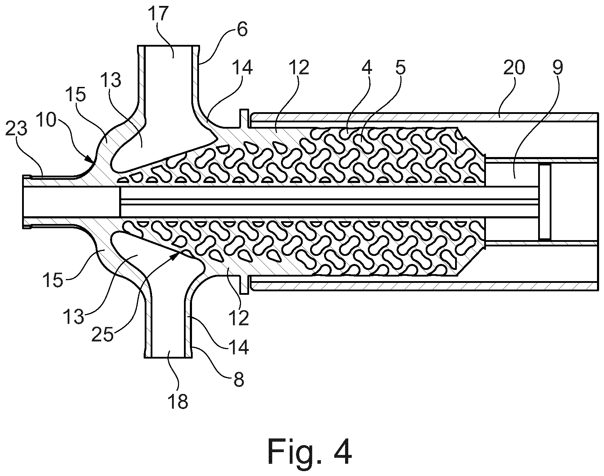

Fig. 1 bis Fig. 4 zeigen ein erstes Ausführungsbeispiel eines Rekuperator-Brenners mit einem Rekuperator 1, der beispielsweise aus einem metallischen und/oder keramischen Material hergestellt sein kann. Der Rekuperator 1 weist zwei getrennte, zum Führen gegenströmender Fluide vorgesehene Strömungssysteme 2, 3 mit jeweils mindestens einem beidseitig offenen Durchströmungskanal 4, 5 auf. Die mindestens zwei Fluide können über Einzüge 6, 7 und Abzüge 8, 9 an den entgegengesetzten Enden von Brennereinlass 10 und Brennerauslass 11 ein-/austreten.

Von den gegenströmenden Fluiden ist das eine von einer vorzuwärmenden Verbrennungsluft und das andere von einem Abgas des Brenners gebildet. Bei dem in Fig. 1 bis Fig. 4 dargestellten Ausführungsbeispiel strömt die vorzuwärmende Verbrennungsluft durch den Durchströmungskanal 5 und das Abgas durch den nach außen offenen Durchströmungskanal 4, der über einen anliegenden Rekuperatormantel 20 abgedichtet wird Als Rekuperator 1 ist ein Wärmeübertragungskörper 12 vorgesehen, der die beiden Strömungssysteme 2, 3 in einem aus einem Stück bestehenden Wärmeübertragungskörper 12 aufnimmt, dessen mantelförmiger Außenwandungsabschnitt 14 am Brennereinlass 10 einen Strömungstopf 13 mit einstückiger Anbindung von Einzug 6 und Abzug 8 ausbildet.

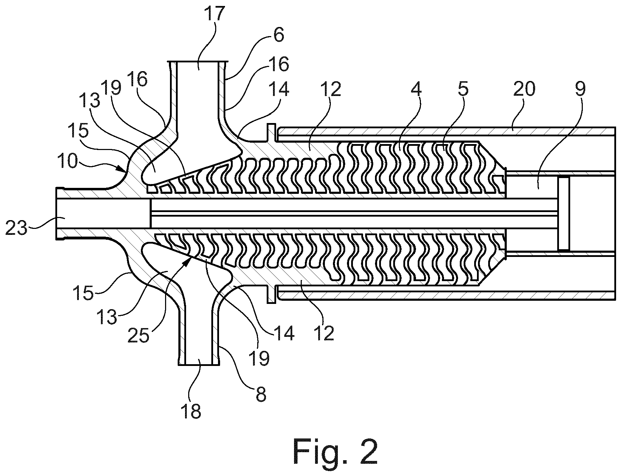

Wie insbesondere Fig. 2 zeigt, kann der Einzug 6 für zu erwärmende Verbrennungsluft bzw. Frischluft zum Wärmeübertragungskörper 12 mindestens teilweise axial überlappend positioniert sein, um diesen mit vorzuwärmender Verbrennungsluft seitlich direkt anzuströmen zu können.

Der Strömungstopf 13 kann von einem Außenwandungsabschnitt 14 mit Wandungsverjüngung gegenüber dem Wärmeübertragungskörper 12 gebildet sein, der einen bauchigen Fortsatz 15 des Wärmeübertragungskörpers 12 bildet. Der bauchige Fortsatz 15 kann zudem mit Schulterabschnitten 16 für die einstückige Anbindung von Stutzen 17, 18 für den Einzug 6 für vorzuwärmende Verbrennungsluft und den Abzug 8 für Abgas des Brenners versehen sein.

Der Strömungstopf 13 bildet einen Innenraum, der mindestens eine Leitwand 19 zur fluidtechnisch getrennten Führung der gegenströmenden Fluide zum Einzug 6 und Abzug 8 umgibt.

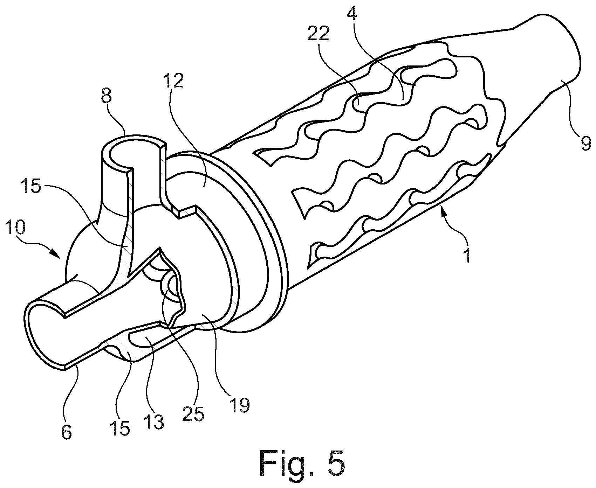

Die mindestens eine Leitwand 19 kann als eine Mantelfläche eines Rotationskörpers geformt sein, wie das Ausführungsbeispiel gemäß Fig. 5 zeigt.

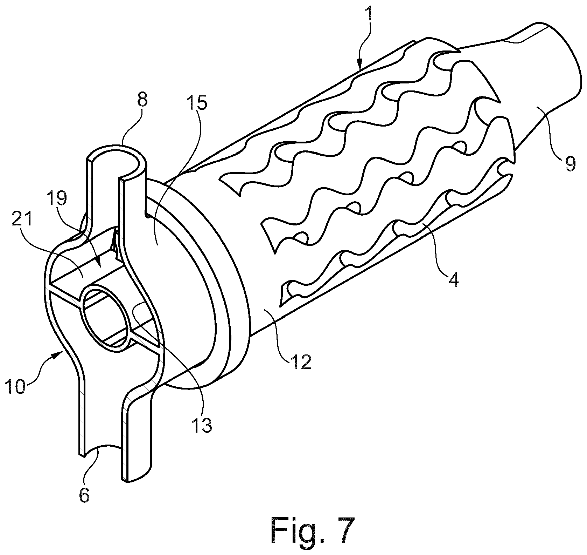

Die mindestens eine Leitwand 19 kann ein Raumtrennsystem 21 in den Strömungstopf 13 einsetzen für einen Übergang des jeweils mindestens einen Durchströmungskanals in den Einzug 6 oder den Abzug 8, wie in Fig. 7 dargestellt ist.

Die mindestens eine Leitwand 19 ist vorzugsweise einstückig mit dem Wärmeübertragungskörper 12 ausgebildet.

Wie Fig. 1 bis Fig. 4 weiterhin zeigen, ist der jeweils mindestens eine Durchströmungskanal 4, 5 der zwei Strömungssysteme 2, 3 zum Führen gegenströmender Fluide jeweils in eine Mehrzahl Teilströmungskanäle aufgeteilt.

Die Teilströmungskanäle des einen und/oder des anderen Durchströmungskanals 4, 5 sind durch Kanalwandöffnungen 22 fluidtechnisch verbindbar.

Der jeweils mindestens eine Durchströmungskanal 4, 5 weist eine Anzahl aufgereihter Röhrchenabschnitte als mindestens einen Durchströmungskanal 4, 5 auf, wobei die Röhrchenabschnitte aus minimalen Oberflächenelementen gebildet sind und die Röhrchenabschnitte in kontinuierlicher Weise verbunden sind.

Die minimalen Oberflächenelemente werden vorzugsweise von dreifach periodischen Minimaloberflächen gebildet. Die aus der dreifach periodischen Minimaloberfläche sich ergebenden Zellstrukturen können kubisch, zylindrisch oder sphärisch ausgestaltet sein.

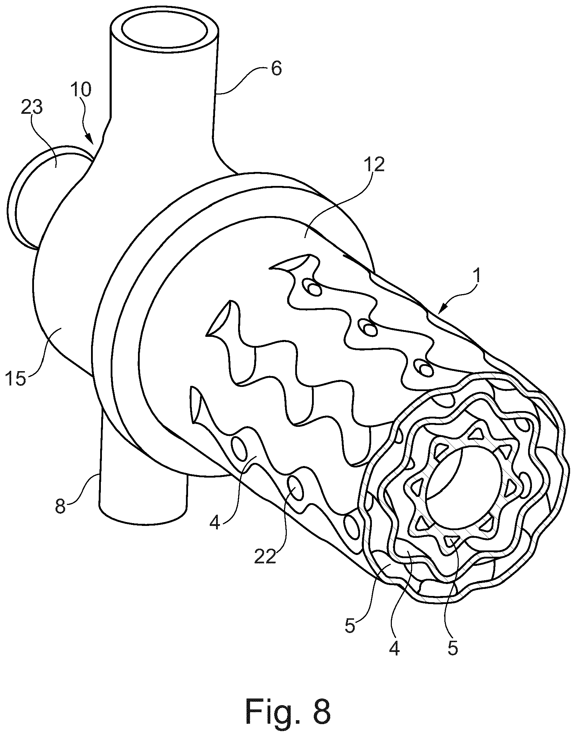

Das erste in den Fig. 1 bis Fig. 4 dargestellte Ausführungsbeispiel zeigt eine kubische Zellstruktur. Fig. 8 zeigt ein Ausführungsbeispiel mit zylindrisch gestalteter Zellstruktur.

Der Rekuperator-Brenner 1 weist ferner beispielsweise in bekannter Weise einen Brenngasstutzen 23 für ein den Wärmeübertragungskörper 12 durchdringendes Brennrohr auf, über das Brenngas zum Brennerauslass 11 geleitet werden kann. Anstelle eines Brennrohrs kann auch ein Brenngasdurchgang einstückig in den Wärmeübertragungskörper 12 vom Brenngasstutzen 23 aus eingeformt sein.

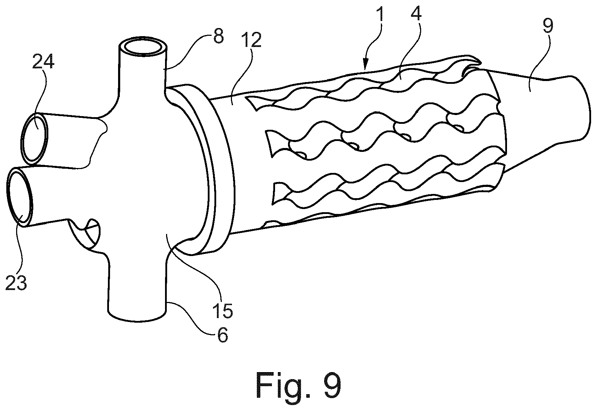

Wie Fig. 9 zeigt, kann mindestens ein drittes und/oder viertes Strömungssystem mit jeweils mindestens einem beidseitig offenen Durchströmungskanal für mindestens ein drittes und/oder viertes Fluid in den Wärmeübertragungskörper integriert sein.

Für das mindestens dritte und/oder vierte Strömungssystem kann ein Ein- und/oder Auslassstutzen 24 einstückig an den Strömungstopf angeformt sein.

Fig. 1 bis Fig. 4 zeigen ferner, dass der Wärmeübertragungskörper 12 einen durchströmbaren Innenkörperabschnitt 25 aufweisen kann, der in den Strömungstopf 13 sich erstreckend positionierbar sein kann. wodurch dieser mit vorzuwärmender Verbrennungsluft seitlich direkt anströmbar ist. Dabei kann ein spitzer oder stumpfer Anströmungswinkel im Bereich des Einzugs 6 als auch des Abzugs 8 ausbildbar sein.

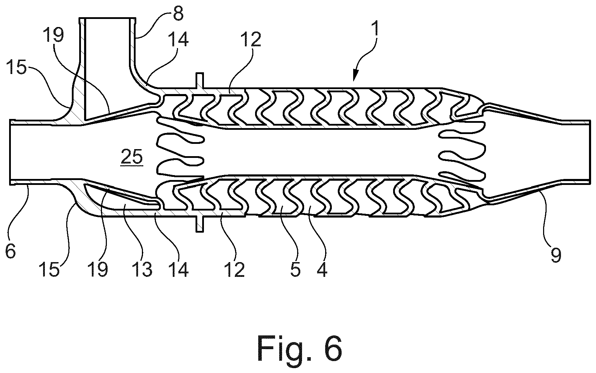

Wie das Ausführungsbeispiel gemäß Fig. 1 bis Fig. 4 zeigt, können der Einzug 6 und der Auszug 8 beispielsweise zueinander ausgerichtet gegenüberstehend am Rekuperator 1 positioniert sein. Das zweite Ausführungsbeispiel gemäß Fig. 5 und Fig. 6 zeigt winkelig zueinander angeordnete Stutzen für Einzug 6 und Abzug 8.

Fig. 7 zeigt ein drittes Ausführungsbeispiel mit gegenüberliegenden Stutzen für Einzug 6 und Abzug 8 und einem Raumtrennsystem 21 im Strömungstopf 13, wie vorstehend ausgeführt.

Eine vollkeramische Ausführung des Rekuperators 1 ist vorzugsweise monolithisch. Die Keramik besteht vorzugsweise aus siliziuminfiltriertem Siliziumcarbid. Besonders bevorzugt sind nichtoxid- und/oder oxidische keramische Werkstoffe, insbesondere siliziuminfiltriertes, reaktionsgebundenes Siliziumcarbid (RBSiC), siliziuminfiltriertes, reaktionsgebundenes Siliziumcarbid/Borcarbid (RBSiC/B4C), siliziuminfiltriertes Siliziumcarbid (RBSiC), siliziumnitrid-gebundenes Siliziumcarbid (NSiC), drucklosgesintertes Siliziumcarbid (SSiC), rekristallisiertes Siliziumcarbid (RSiC), Aluminiumoxid, silikatisch gebundenes Siliziumcarbid, Zirkonoxid.

## Patentansprüche

1. Rekuperator-Brenner mit einem Rekuperator (1), der zwei getrennte, zum Führen gegenströmender Fluide vorgesehene Strömungssysteme (2, 3)mit jeweils mindestens einem beidseitig offenen Durchströmungskanal (4, 5) aufweist, wobei die mindestens zwei Fluide über Ein- und Abzüge (6, 7; 8, 9) an den entgegengesetzten Enden von Brennereinlass (10) und Brennauslass (11) ein-/austreten und von den Fluiden das eine von einer vorzuwärmenden Verbrennungsluft und das andere von einem Abgas des Brenners gebildet ist, **dadurch gekennzeichnet, dass** der Rekuperator (1) die beiden Strömungssysteme (2, 3) in einem aus einem Stück bestehenden Wärmeübertragungskörper (12) aufnimmt, dessen mantelförmiger Außenwandungsabschnitt (14) am Brennereinlass (10) einen Strömungstopf (13) mit einstückiger Anbindung von Einzug (6) und Abzug (8) ausbildet.

2. Rekuperator-Brenner nach Anspruch 1, **dadurch gekennzeichnet, dass** der Strömungstopf (13) von dem Außenwandungsabschnitt (14) mit einer Wandungsverjüngung gebildet ist, der einen bauchigen Fortsatz (15) des Wärmeübertragungskörpers (12) bildet mit Schulterabschnitten (16) für die einstückige Anbindung von Stutzen (17, 18) für den Einzug (6) für vorzuwärmende Verbrennungsluft und den Abzug (8) für Abgas des Brenners.

3. Rekuperator-Brenner nach Anspruch 1 oder 2, **dadurch gekennzeichnet, dass** ein Innenraum des Strömungstopfs (13) mindestens eine Leitwand (19) zur fluidtechnisch getrennten Führung der gegenströmenden Fluide zum Einzug (6) und Abzug (8) umgibt.

4. Rekuperator-Brenner nach Anspruch 3, **dadurch gekennzeichnet, dass** die mindestens eine Leitwand (19) als eine Mantelfläche eines Rotationskörpers geformt ist.

5. Rekuperator-Brenner nach Anspruch 3 oder 4, **dadurch gekennzeichnet, dass** die mindestens eine Leitwand (19) ein Raumtrennsystem (21) in den Strömungstopf (13) einsetzt für einen Übergang des jeweils mindestens einen Durchströmungskanals (4, 5) in den Einzug (6) oder den Abzug (8).

6. Rekuperator-Brenner nach einem der Ansprüche 3 bis 5, **dadurch gekennzeichnet, dass** die mindestens eine Leitwand (19) einstückig mit dem Wärmeübertragungskörper (12) ausgebildet ist.

7. Rekuperator-Brenner nach einem der Ansprüche 1 bis 6, **dadurch gekennzeichnet, dass** der jeweils mindestens eine Durchströmungskanal (4, 5) der zwei Strömungssysteme (2, 3) zum Führen gegenströmender Fluide jeweils in eine Mehrzahl Teilströmungskanäle aufgeteilt ist.

8. Rekuperator-Brenner nach Anspruch 7, **dadurch gekennzeichnet, dass** die Teilströmungskanäle des einen und/oder des anderen Durchströmungskanals (4, 5) durch Kanalwandöffnungen (22) fluidtechnisch verbindbar sind.

9. Rekuperator-Brenner nach einem der Ansprüche 1 bis 8, **dadurch gekennzeichnet, dass** der jeweils mindestens eine Durchströmungskanal (4, 5) eine Anzahl aufgereihter Röhrchenabschnitte als mindestens einen Durchströmungskanal aufweist, wobei die Röhrchenabschnitte aus minimalen Oberflächenelementen gebildet sind und die Röhrchenabschnitte in kontinuierlicher Weise verbunden sind.

10. Rekuperator-Brenner nach Anspruch 9, **dadurch gekennzeichnet, dass** die minimalen Oberflächenelemente von dreifach periodischen Minimaloberflächen gebildet sind.

11. Rekuperator-Brenner nach Anspruch 10, **dadurch gekennzeichnet, dass** die aus der dreifach periodischen Minimaloberfläche sich ergebenden Zellstrukturen kubisch, zylindrisch oder sphärisch ausgestaltet sind.

12. Rekuperator-Brenner nach einem der Ansprüche 1 bis 11, **dadurch gekennzeichnet, dass** mindestens ein drittes und/oder viertes Strömungssystem mit jeweils mindestens einem beidseitig offenen Durchströmungskanal für mindestens ein drittes und/oder viertes Fluid in den Wärmeübertragungskörper (12) integriert ist.

13. Rekuperator-Brenner nach Anspruch 12, **dadurch gekennzeichnet, dass** für das mindestens dritte und/oder vierte Strömungssystem ein Ein- und/oder Auslassstutzen (24) einstückig an den Strömungstopf (13) angeformt ist.

14. Rekuperator-Brenner nach einem der Ansprüche 1 bis 13, **dadurch gekennzeichnet, dass** der Wärmeübertragungskörper (12) einen durchströmbaren Innenkörperabschnitt (25) aufweist, der in den Strömungstopf (13) sich erstreckend positionierbar ist, wodurch dieser mit vorzuwärmender Verbrennungsluft seitlich direkt anströmbar ist.

15. Rekuperator-Brenner nach Anspruch 14, **dadurch gekennzeichnet, dass** ein spitzer oder stumpfer Anströmungswinkel im Bereich des Einzugs (6) ausbildbar ist.

16. Rekuperator-Brenner nach einem der Ansprüche 1 bis 15, **dadurch gekennzeichnet, dass** der Einzug (6) und der Abzug (8) zueinander ausgerichtet gegenüberstehend am Rekuperator (1) positioniert sind.

17. Rekuperator-Brenner nach einem der Ansprüche 1 bis 16, **dadurch gekennzeichnet, dass** an dem Brennereinlass (10) ein Brennrohr eingebracht ist, das in eine Brennkammer mündet und das sich durch den Wärmeübertragungskörper (12) erstreckt.

18. Rekuperator-Brenner nach einem der Ansprüche 1 bis 17, **dadurch gekennzeichnet, dass** der Wärmeübertragungskörper (12) aus einem keramischen und/oder metallischen Werkstoff gebildet ist.

19. Rekuperator-Brenner nach einem der Ansprüche 1 bis 18, **dadurch gekennzeichnet, dass** der Rekuperator (1) als ein keramischer Rekuperator ausgebildet ist, der monolithisch ausgeführt ist.

20. Rekuperator-Brenner nach Anspruch 18 oder 19, **dadurch gekennzeichnet, dass** die Keramik aus einem nichtoxid- und/oder oxidischen keramischen Werkstoff, insbesondere siliziuminfiltriertes, reaktionsgebundenes Siliziumcarbid (RBSiC), siliziuminfiltriertes, reaktionsgebundenes Siliziumcarbid/Borcarbid (RBSiC/B4C), siliziuminfiltriertes Siliziumcarbid (RBSiC), siliziumnitrid-gebundenes Siliziumcarbid (NSiC), drucklosgesintertes Siliziumcarbid (SSiC), rekristallisiertes Siliziumcarbid (RSiC), Aluminiumoxid, silikatisch gebundenes Siliziumcarbid, Zirkonoxid, besteht.

## Claims

1. Recuperator burner comprising a recuperator (1), which has two separate flow systems (2, 3) provided for guiding counter-flowing fluids, each system comprising at least one flow channel (4, 5) being open on both sides, and the at least two fluids entering/leaving via intake inputs and offtake outputs (6, 7; 8, 9) at opposite ends of the burner inlet (10) and burner outlet (11), and one of the fluids is set up by a combustion air to be preheated and the other by an exhaust gas of the burner, **characterized in in that** the recuperator (1) accommodates said two flow systems (2, 3) in a heat transfer body (12) which is made of one piece and whose jacket-shaped outer wall section (14) at the burner inlet (10) defines a flow pot (13) comprising said input (6) and output (8) integrally attached.

2. Recuperator burner according to claim 1, **characterized in that** the flow pot (13) is defined by the outer wall section (14) having a wall tapering, which forms a bulbous extension (15) of the heat transfer body (12) having shoulder sections (16) for the integrally connection of necks (17, 18) for the input (6) for combustion air to be preheated and the output (8) for exhaust gas from the burner.

3. Recuperator burner according to claim 1 or 2, **characterized in that** an interior space of the flow pot (13) surrounds at least one guide wall (19) for the fluidically separate guidance of the counter-flowing fluids to the input (6) and output (8).

4. Recuperator burner according to claim 3, **characterized in that** the at least one guide wall (19) is shaped as a lateral surface of a body of revolution.

5. Recuperator burner according to claim 3 or 4, **characterized in that** the at least one guide wall (19) inserts a space separating system (21) into the flow pot (13) for a transition of the at least one flow channel (4, 5) into the input (6) or the output (8).

6. Recuperator burner according to one of claims 3 to 5, **characterized in that** the at least one guide wall (19) is formed integrally with the heat transfer body (12).

7. Recuperator burner according to one of claims 1 to 6, **characterized in that** the at least one flow channel (4, 5) of each of the two flow systems (2, 3) is divided into a plurality of partial flow channels for guiding counter-flowing fluids.

8. Recuperator burner according to claim 7, **characterized in that** the partial flow channels of one and/or the other flow channel (4, 5) can be fluidically connected by channel wall openings (22).

9. Recuperator burner according to one of claims 1 to 8, **characterized in that** the at least one flow channel (4, 5) in each case has a number of lined-up tube sections as at least one flow-through channel, and the tube sections being formed from minimal surface elements and the tube sections being connected in a continuous manner.

10. Recuperator burner according to claim 9, **characterized in that** the minimum surface elements are set up by triple periodic minimum surfaces.

11. Recuperator burner according to claim 10, **characterized in that** the cell structures resulting from the triple periodic minimum surface are cubic, cylindrical or spherical.

12. Recuperator burner according to one of claims 1 to 11, **characterized in that** at least one third and/or fourth flow system, each with at least one flow channel open on both sides for at least one third and/or fourth fluid, is integrated into the heat transfer body (12).

13. Recuperator burner according to claim 12, **characterized in that** an inlet and/or outlet connection piece (24) for the at least third and/or fourth flow system is integrally attached to the flow pot (13).

14. Recuperator burner according to one of claims 1 to 13, **characterized in that** the heat transfer body (12) has a flow-through inner body section (25) which can be positioned extending into the flow pot (13), as a result of which the latter can be directly flowed against laterally with combustion air to be preheated.

15. Recuperator burner according to claim 14, **characterized in that** an acute or obtuse angle of flow can be formed in the region of the input (6).

16. Recuperator burner according to one of claims 1 to 15, **characterized in that** the input (6) and the output (8) are positioned opposite each other on the recuperator (1) in an aligned manner.

17. Recuperator burner according to one of claims 1 to 16, **characterized in that** a combustion tube is introduced at the burner inlet (10), which opens into a combustion chamber and which extends through the heat transfer body (12).

18. Recuperator burner according to one of claims 1 to 17, **characterized in that** the heat transfer body (12) is formed from a ceramic and/or metallic material.

19. Recuperator burner according to one of claims 1 to 18, **characterized in that** the recuperator (1) is designed as a ceramic recuperator which is monolithic.

20. Recuperator burner according to claim 18 or 19, **characterized in that** the ceramic is made of a non-oxide and/or oxide ceramic material, in particular silicon-infiltrated, reaction-bonded silicon carbide (RBSiC), silicon-infiltrated, reaction-bonded silicon carbide/boron carbide (RBSiC/B4C), silicon-infiltrated silicon carbide (RBSiC), silicon nitride-bonded silicon carbide (NSiC), pressureless sintered silicon carbide (SSiC), recrystallized silicon carbide (RSiC), aluminium oxide, silicate-bonded silicon carbide, zirconium oxide.

## Revendications

1. Brûleur récupérateur avec un récupérateur (1), qui présente deux systèmes d'écoulement (2, 3) séparés, prévus pour guider des fluides s'écoulant à contre-courant, avec respectivement au moins un canal d'écoulement traversant (4, 5) ouvert de part et d'autre, dans lequel les au moins deux fluides entrent/sortent sur des extrémités opposées d'entrée de brûleur (10) et de sortie de brûleur (11) par l'intermédiaire d'arrivées et d'évacuations (6, 7 ; 8, 9) et des fluides, l'un est formé par un air de combustion à préchauffer et l'autre est formé par un gaz d'échappement du brûleur, **caractérisé en ce que** le récupérateur (1) accueille les deux systèmes d'écoulement (2, 3) dans un corps de transfert de chaleur (12) constitué d'une seule pièce, dont la section de paroi externe (14) en forme de coque réalise sur l'entrée de brûleur (10) un pot d'écoulement (13) rattachant d'un seul tenant l'arrivée (6) et l'évacuation (8).

2. Brûleur récupérateur selon la revendication 1, **caractérisé en ce que** le pot d'écoulement (13) est formé par la section de paroi externe (14) avec un rétrécissement de paroi, qui forme un prolongement (15) bombé du corps de transfert de chaleur (12) avec des sections d'épaulement (16) pour le rattachement d'un seul tenant de tubulures (17, 18) pour l'arrivée (6) pour l'air de combustion à préchauffer et l'évacuation (8) pour des gaz d'échappement du brûleur.

3. Brûleur récupérateur selon la revendication 1 ou 2, **caractérisé en ce qu'**un espace intérieur du pot d'écoulement (13) entoure au moins une paroi déflectrice (19) destinée au guidage séparé selon une technique des fluides des fluides s'écoulant à contre-courant vers l'arrivée (6) et l'évacuation (8).

4. Brûleur récupérateur selon la revendication 3, **caractérisé en ce que** l'au moins une paroi déflectrice (19) est formée en tant qu'une surface enveloppante d'un corps de rotation.

5. Brûleur récupérateur selon la revendication 3 ou 4, **caractérisé en ce que** l'au moins une paroi déflectrice (19) insère un système de séparation d'espace (21) dans le pot d'écoulement (13) pour une transition de l'au moins un canal d'écoulement traversant (4, 5) respectivement dans l'arrivée (6) ou l'évacuation (8).

6. Brûleur récupérateur selon l'une quelconque des revendications 3 à 5, **caractérisé en ce que** l'au moins une paroi déflectrice (19) est réalisée d'un seul tenant avec le corps de transfert de chaleur (12).

7. Brûleur récupérateur selon l'une quelconque des revendications 1 à 6, **caractérisé en ce que** l'au moins un canal d'écoulement traversant (4, 5) respectivement des deux systèmes d'écoulement (2, 3) est divisé respectivement en une multitude de canaux d'écoulement partiel pour guider des fluides s'écoulant à contre-courant.

8. Brûleur récupérateur selon la revendication 7, **caractérisé en ce que** les canaux d'écoulement partiel d'un et/ou de l'autre canal d'écoulement traversant (4, 5) peuvent être raccordés par une technique des fluides par des ouvertures de paroi de canal (22).

9. Brûleur récupérateur selon l'une quelconque des revendications 1 à 8, **caractérisé en ce que** l'au moins un canal d'écoulement traversant (4, 5) respectivement présente un nombre de sections de petit tube alignées en tant qu'au moins un canal d'écoulement traversant, dans lequel les sections de petit tube sont formées à partir d'éléments de surface minimes et les sections de petit tube sont raccordées en continu.

10. Brûleur récupérateur selon la revendication 9, **caractérisé en ce que** les éléments de surface minimes sont formés par des surfaces minimes périodiques à trois reprises.

11. Brûleur récupérateur selon la revendication 10, **caractérisé en ce que** les structures cellulaires résultant de la surface minime périodique à trois reprises sont configurées de manière cubique, de manière cylindrique ou de manière sphérique.

12. Brûleur récupérateur selon l'une quelconque des revendications 1 à 11, **caractérisé en ce qu'**au moins un troisième et/ou quatrième système d'écoulement avec respectivement au moins un canal d'écoulement traversant ouvert de part et d'autre pour au moins un troisième et/ou quatrième fluide est intégré dans le corps de transfert de chaleur (12).

13. Brûleur récupérateur selon la revendication 12, **caractérisé en ce qu'**une tubulure d'entrée et/ou de sortie (24) est formée d'un seul tenant sur le pot d'écoulement (13) pour l'au moins un troisième et/ou quatrième système d'écoulement.

14. Brûleur récupérateur selon l'une quelconque des revendications 1 à 13, **caractérisé en ce que** le corps de transfert de chaleur (12) présente une section de corps interne (25) pouvant être traversée par un écoulement, qui peut être positionnée de manière à s'étendre dans le pot d'écoulement (13), ce dernier pouvant ainsi être parcouru directement latéralement par de l'air de combustion à préchauffer.

15. Brûleur récupérateur selon la revendication 14, **caractérisé en ce qu'**un angle d'écoulement aigu ou obtus peut être réalisé dans la zone de l'arrivée (6).

16. Brûleur récupérateur selon l'une quelconque des revendications 1 à 15, **caractérisé en ce que** l'arrivée (6) et l'évacuation (8) sont positionnées sur le récupérateur (1) en vis-à-vis de manière orientée l'une par rapport à l'autre.

17. Brûleur récupérateur selon l'une quelconque des revendications 1 à 16, **caractérisé en ce qu'**est introduit sur l'entrée de brûleur (10) un tube de combustion, qui débouche dans une chambre de combustion et qui s'étend à travers le corps de transfert de chaleur (12).

18. Brûleur récupérateur selon l'une quelconque des revendications 1 à 17, **caractérisé en ce que** le corps de transfert de chaleur (12) est formé à partir d'un matériau en céramique et/ou métallique.

19. Brûleur récupérateur selon l'une quelconque des revendications 1 à 18, **caractérisé en ce que** le récupérateur (1) est réalisé en tant qu'un récupérateur en céramique, qui est conçu de manière monolithique.

20. Brûleur récupérateur selon la revendication 18 ou 19, **caractérisé en ce que** la céramique est constituée d'un matériau en céramique non oxydique et/ou oxydique, en particulier de carbure de silicium lié par réaction en silicium infiltré (RBSiC), de carbure de silicium/carbure de bore lié par réaction infiltré en silicium (RBCiC/B4C), de carbure de silicium infiltré en silicium (RBSiC), de carbure de silicium lié par nitrure de silicium (NSiC), de carbure de silicium fritté sans pression (SSiC), de carbure de silicium recristallisé (RSiC), d'oxyde d'aluminium, de carbure de silicium lié au silicate, d'oxyde de zirconium.
